# FASCICULE DE BREVET EUROPEEN

(11) **EP 3 638 884 B1**
(45) Date de publication et mention de la délivrance du brevet: **24.03.2021**
(21) Numéro de dépôt: 18735670.4
(22) Date de dépôt: 11.06.2018
(51) Int. Cl.: F01D 5/28, C23C 30/00, C23C 4/11

(54) **PIÈCE DE TURBOMACHINE REVÊTUE ET PROCÉDÉ DE FABRICATION ASSOCIÉ**
BESCHICHTETE TURBOMASCHINENKOMPONENTE UND ZUGEHÖRIGES HERSTELLUNGSVERFAHREN
COATED TURBOMACHINE COMPONENT AND CORRESPONDING METHOD OF MANUFACTURING

(30) Priorité: 12.06.2017 FR 1755211
(43) Date de publication de la demande: 22.04.2020
(73) Titulaire: Safran, 75015 Paris (FR)
(72) Inventeur: BIANCHI, Luc, 77550 Moissy-Cramayel (FR); JOULIA, Aurélien, 77550 Moissy-Cramayel (FR); BERNARD, Benjamin Dominique Roger Joseph, 77550 Moissy-Cramayel (FR)
(74) Mandataire: Cabinet Beau de Loménie
(86) Numéro de dépôt international: PCT/FR2018/051349
(87) Numéro de publication internationale: WO 2018/229406

(56) Documents cités:
- EP-A2- 2 202 212
- EP-A2- 2 778 147
- WO-A1-2011/110794
- WO-A2-2009/091721
- WO-A2-2015/116300
- BRYAN J. HARDER ET AL: "Chemical and Mechanical Consequences of Environmental Barrier Coating Exposure to Calcium-Magnesium-Aluminosilicate : Chemical and Mechanical Consequences of EBC Exposure to CMAS", JOURNAL OF THE AMERICAN CERAMIC SOCIETY., vol. 94, no. s1, 17 mars 2011 (2011-03-17) , pages s178-s185, XP055495764, US ISSN: 0002-7820, DOI: 10.1111/j.1551-2916.2011.04448.x

## Description

### Arrière-plan de l'invention

La présente invention se rapporte au domaine général des revêtements de protection utilisés pour isoler thermiquement des pièces dans des environnements à haute température telles que les pièces utilisées dans des parties chaudes des turbomachines aéronautiques ou terrestres.

Afin d'améliorer le rendement des turbomachines, en particulier des turbines haute pression (TuHP) pour les systèmes stationnaires terrestres ou pour la propulsion aéronautique, des températures de plus en plus élevées sont envisagées. Dans ces conditions, les matériaux utilisés, comme les alliages métalliques ou matériaux composites à matrice céramique (CMC), nécessitent une protection, principalement pour maintenir une température de surface suffisamment basse garantissant leur intégrité fonctionnelle et limitant leur oxydation/corrosion par l'atmosphère environnante.

Les protections de types « barrière thermique » (BT) ou « barrière environnementale » (EBC pour « Environmental Barrier Coating » en anglais), sont des empilements multicouches complexes généralement constitués d'une sous-couche permettant une protection contre l'oxydation/corrosion déposée à la surface du matériau de base (alliages métallique ou matériau composite) du substrat, elle-même surmontée d'un revêtement céramique dont la fonction première est de limiter la température de surface des composants revêtus. Afin d'assurer sa fonction de protection contre l'oxydation/corrosion et de favoriser l'accrochage du revêtement céramique, la sous-couche est pré-oxydée afin de former à sa surface une couche d'alumine dense appelée « Thermally Grown Oxyde » (TGO) dans le cas des barrières thermiques. De tels systèmes de protection sont notamment décrits dans les documents D. R. Clarke, M. Oechsner, N. P. Padture, « Thermal-Barrier coatings for more efficient gas-turbine engines », MRS Bulletin, 37, 2012, pp 892-898 et D. Zhu, R. A. Miller, «Thermal and Environmental Barrier Coatings for Advanced Propulsion Engine Systems », NASA Technical Mémorandum, 213129, 2004.

La durée de vie de ces systèmes (BT et EBC) dépend de la résistance de l'empilement au cyclage thermique, d'une part, et de la résistance de la couche externe aux agressions environnementales (érosion par les particules solides, résistance chimique, corrosion, ...), d'autre part.

En particulier, ces systèmes se dégradent très rapidement lorsqu'ils sont exposés à un milieu riche en particules de sable ou de cendre volcanique (riches en composés inorganiques type silice) que l'on caractérise communément par l'appellation générique CMAS (pour oxydes de Calcium, Magnésium, Aluminium et Silicium). L'infiltration du CMAS à l'état fondu dans une barrière thermique ou une barrière environnementale produit généralement une dégradation par :
- rigidification de la couche infiltrée conduisant à une rupture mécanique (délamination) ;
- déstabilisation par dissolution chimique de la barrière thermique et formation de produits recristallisés présentant des propriétés mécaniques et/ou des volumes différents.

Pour s'affranchir de cette problématique, des compositions dites « anti-CMAS » ont été développées, ces compositions permettant la formation d'une couche barrière étanche par réaction chimique avec le CMAS comme décrit notamment dans le document C. G. Levi, J. W. Hutchinson, M.-H. Vidal-Sétif, C. A. Johnson, « Environmental degradation of thermal barrier coatings by molten deposits », MRS Bulletin, 37, 2012, pp 932-941. Les compositions anti-CMAS employées vont subir une dissolution dans le CMAS pour former une phase protectrice dense présentant un point de fusion plus élevé que celui du CMAS. Dans le cas de la famille des zirconates de terres rares, matériaux anti-CMAS très prometteurs, cette dissolution permet la formation d'une phase apatite de type Ca₂RE₈(SiO₄)₆O₂ (RE=terre rare) qui sera bloquante mais également des phases « parasites » ou secondaires de type zircone partiellement stabilisée (majoritairement sous forme fluorite), spinelles, voire des silicates de terre rare comme décrit notamment dans les documents S. Krämer, J. Yang, C. G. Levi, « Infiltration-inhibiting reaction of gadolinium zirconate thermal barrier coatings with CMAS melts », Journal of the American Ceramic Society, 91, 2008, pp 576-583 et H. Wang, « Reaction mechanism of CaO-MgO-Al2O3-SiO2 (CMAS) on lanthanide zirconia thermal barrier coatings", PHD Thesis, Auburn University, USA, 2016. Toutefois, ces phases secondaires présentent des volumes et/ou des propriétés thermomécaniques ou mécaniques pouvant amoindrir l'effet bénéfique de l'anti-CMAS.

Le document EP 2 202 212 A2 divulgue une couche de protection contre les CMAS selon le préambule de la revendication 1.

Il existe donc un besoin pour une pièce de turbomachine munie d'une couche de protection contre les CMAS qui permet confiner la zone de réaction avec les CMAS au voisinage de la surface de la couche de protection et de limiter la formation de phases secondaires.

### Objet et résumé de l'invention

L'invention concerne une pièce de turbomachine revêtue selon la revendication 1 et un procédé de fabrication d'une telle pièce selon la revendication 9. La présente invention a donc pour but principal d'augmenter la capacité ou cinétique réactionnelle d'une couche de protection contre les CMAS à former une couche ou phase bloquante vis-à-vis des contaminants liquides afin de limiter leur pénétration en profondeur dans le revêtement en proposant une pièce de turbomachine revêtue comprenant un substrat et au moins une couche de protection contre les aluminosilicates de calcium et de magnésium CMAS présente sur ledit substrat, la couche comprenant une première phase d'un matériau de protection contre les aluminosilicates de calcium et de magnésium CMAS susceptible de former une phase de type apatite ou anorthite en présence d'aluminosilicates de calcium et de magnésium CMAS et une deuxième phase comprenant des particules d'au moins un silicate de terre rare RE^{a} dispersées dans la première phase.

L'ajout d'une phase de silicates de terre rares sous forme divisée dans la première phase ou phase de matrice de la couche de protection anti-CMAS permet d'augmenter la réactivité de cette dernière afin de limiter la profondeur de pénétration capillaire du CMAS liquide au sein de la porosité et/ou du réseau de fissurations verticales présentes dans la couche. En effet, les silicates de terre rare sont des précurseurs de phase apatite protectrice. La deuxième phase constitue donc ici une phase « activatrice » de phase apatite protectrice. Par conséquent, la durée de vie de la couche de protection anti-CMAS ainsi obtenue est augmentée par rapport à celle attendue pour la même couche de protection sans ajout de cette deuxième phase. De plus, l'inclusion de particules d'un silicate de terre rare dans le matériau de base de la couche de protection anti-CMAS permet, lors de la formation de la phase bloquante, de limiter la formation de phases secondaires présentant des propriétés mécaniques limitant les effets protecteurs de la couche.

Selon un aspect particulier de l'invention, le silicate de terre rare utilisé pour la deuxième phase de la couche de protection est un mono-silicates de terre rare RE^{a}₂SiO₅ ou un di-silicates de terre rare RE^{a}₂Si₂O₇, où RE^{a} est choisi parmi : Y (Yttrium), La (Lanthane), Ce (Cérium), Pr (Praséodyme), Nd (Néodyme), Pm (Prométhium), Sm (Samarium), Eu (Europium), Gd (Gadolinium), Tb (Terbium), Dy (Dysprosium), Ho (Holmium), Er (Erbium), Tm (Thulium), Yb (Ytterbium), Lu (Lutécium).

Selon un autre aspect particulier de l'invention, les particules de silicate de terre rare RE^{a} dispersées dans la couche de protection contre les CMAS présentent une taille moyenne comprise entre 5 nm et 50 µm, plus préférentiellement entre 5 nm et 1 µm.

Selon un autre aspect particulier de l'invention, la couche de protection contre les CMAS présente une teneur volumique en particules du silicate de terre rare comprise entre 1% et 80%.

Selon un autre aspect particulier de l'invention, le pourcentage volumique de particules de céramique de silicate de terre rare RE^{a} présentes dans la couche de protection contre les CMAS varie dans le sens de l'épaisseur de la couche de protection, le pourcentage volumique de particules de céramique de silicate de terre rare RE^{a} augmentant progressivement entre une première zone de ladite couche voisine du substrat et une deuxième zone de ladite couche éloignée de la première zone.

Selon un autre aspect particulier de l'invention, la couche de protection contre les CMAS présente une épaisseur comprise entre 1 µm et 1000 µm.

Selon l'invention, le matériau de protection contre les aluminosilicates de calcium et de magnésium CMAS de la première phase susceptible de former des phases de type apatite ou anorthite correspond à un des matériaux suivants ou à un mélange de plusieurs des matériaux suivants : les zirconates de terre rare RE^{b}₂Zr₂O₇, où RE^{b} = Y (Yttrium), La (Lanthane), Ce (Cérium), Pr (Praséodyme), Nd (Néodyme), Pm (Prométhium), Sm (Samarium), Eu (Europium), Gd (Gadolinium), Tb (Terbium), Dy (Dysprosium), Ho (Holmium), Er (Erbium), Tm (Thulium), Yb (Ytterbium), Lu (Lutécium), les zircones totalement stabilisées, les phases delta A₄B₃O₁₂, où A= Y → Lu et B = Zr, Hf, les composites Y₂O₃ avec ZrO₂, les grenats d'yttrium et d'aluminium (YAG), les composites YSZ-Al₂O₃ ou YSZ-Al₂O₃-TiO₂.

Selon un autre aspect particulier de l'invention, une couche de barrière thermique est interposée entre le substrat et la couche de protection contre les aluminosilicates de calcium et de magnésium CMAS.

Selon un autre aspect particulier de l'invention, le substrat est en superalliage à base de nickel ou cobalt et comporte à sa surface une couche de liaison alumino-formeuse.

L'invention a également pour objet un procédé de fabrication d'une pièce de turbomachine selon l'invention, comprenant au moins une étape de formation d'une couche de protection contre les aluminosilicates de calcium et de magnésium CMAS directement sur le substrat ou sur une couche de barrière thermique présente sur le substrat, l'étape de formation étant réalisée avec un des procédés suivants :
- projection plasma de suspension à partir d'une suspension contenant une poudre ou un précurseur d'un matériau de protection contre les aluminosilicates de calcium et de magnésium CMAS et une poudre ou un précurseur d'un silicate de terre rare RE ou de toute combinaison de ces éléments,
- projection par flamme à grande vitesse à partir d'une suspension contenant une poudre ou un précurseur d'un matériau de protection contre les aluminosilicates de calcium et de magnésium CMAS et une poudre ou un précurseur d'un silicate de terre rare RE ou de toute combinaison de ces éléments,
- projection plasma à pression atmosphérique d'une poudre d'un matériau de protection contre les aluminosilicates de calcium et de magnésium CMAS en combinaison avec projection plasma de suspension ou projection par flamme à grande vitesse à partir d'une solution contenant un précurseur de céramique de silicate de terre rare RE ou une poudre de céramique de silicate de terre rare RE en suspension.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- les figures 1A et 1B montrent l'infiltration de contaminants liquides dans une couche de protection contre les aluminosilicates de calcium et de magnésium CMAS selon l'art antérieur,
- les figures 2A et 2B montrent l'infiltration de contaminants liquides dans une couche de protection contre les aluminosilicates de calcium et de magnésium CMAS selon l'invention,
- la figure 3 est un premier exemple de mise en œuvre d'un procédé de réalisation d'une pièce de turbomachine selon l'invention,
- la figure 4 est un deuxième exemple de mise en œuvre d'un procédé de réalisation d'une pièce de turbomachine selon l'invention,
- la figure 5 est un troisième exemple de mise en œuvre d'un procédé de réalisation d'une pièce de turbomachine selon l'invention,
- la figure 6 est un quatrième exemple de mise en œuvre d'un procédé de réalisation d'une pièce de turbomachine selon l'invention.

### Description détaillée de l'invention

L'invention s'applique d'une manière générale à toute pièce de turbomachine revêtue d'une couche de protection comprenant une phase d'un matériau de protection contre les aluminosilicates de calcium et de magnésium CMAS. Par « matériau de protection contre les CMAS », on entend tous les matériaux qui permettent d'empêcher ou de réduire l'infiltration de CMAS fondus dans la couche de protection notamment par la formation d'au moins une phase apatite ou anorthite.

Selon l'invention, le matériau de protection contre les aluminosilicates de calcium et de magnésium CMAS susceptible de former des phases de type apatite ou anorthite correspond à un des matériaux suivants ou à un mélange de plusieurs des matériaux suivants :
- les zirconates de terre rare RE^{b}₂Zr₂O₇, où RE^{b} = Y (Yttrium), La (Lanthane), Ce (Cérium), Pr (Praséodyme), Nd (Néodyme), Pm (Prométhium), Sm (Samarium), Eu (Europium), Gd (Gadolinium), Tb (Terbium), Dy (Dysprosium), Ho (Holmium), Er (Erbium), Tm (Thulium), Yb (Ytterbium), Lu (Lutécium),
- les zircones totalement stabilisées,
- les phases delta A₄B₃O₁₂, où A désigne un élément quelconque choisi parmi : Y, La, Ce, Pr, Nd, Pm, Sm, Eu, Gd, Tb, Dy, Ho, Er, Tm, Yb et Lu et B = Zr, Hf,
- les composites comprenant Y₂O₃ avec ZrO₂,
- les grenats d'yttrium et d'aluminium (YAG),
- les composites YSZ-Al₂O₃ ou YSZ-Al₂O₃-TiO₂.

L'invention s'applique plus particulièrement aux zirconates de terre rare RE^{b}₂Zr₂O₇, où RE^{b} = Y, La, Nd, Sm, Gd, Dy, Yb, aux phases delta avec A = Y, Dy ou Yb et au composite Y₂O₃-ZrO₂.

Conformément à l'invention, on ajoute à cette première phase, constitutive de la matrice de la couche de protection contre les CMAS, une deuxième phase sous forme de particules d'au moins un silicate de terre rare RE dispersées dans la couche de protection dont la matrice est formée par la première phase.

Les inventeurs ont constaté que des mono-silicates ou di-silicates de terre rare sont capables de réagir en présence de CMAS pour former une phase apatite, phase bloquante qui permet de limiter la profondeur d'infiltration du CMAS liquide dans la couche de protection, et ce sans être dissous dans le verre liquide. Les inventeurs ont donc déterminé que l'adjonction sous forme d'une charge de mono-silicates et/ou di-silicates de terre rare dispersée dans un matériau de protection contre les CMAS constitue une phase « activatrice » pour la formation de phases apatites. En exacerbant ainsi la réactivité du matériau de protection contre les CMAS avec des charges réparties dans le matériau de protection contre les CMAS, il est possible de former des phases bloquantes pour les CMAS liquides par la mise en jeu de mécanismes réactionnels différents, la formation des phases bloquantes étant générée de façon indépendante entre le matériau de protection contre les CMAS de la première phase et les particules de silicate de terre rare de la deuxième phase. On limite ainsi l'infiltration du CMAS liquide dans le volume du matériau. Par conséquent, en limitant la profondeur d'infiltration du CMAS dans la couche de protection, les changements de propriétés thermomécaniques ou de volumes, provenant de la formation des phases bloquantes, ainsi que des phases secondaires provenant de la dissolution du matériau de protection contre les CMAS, sont limités. Les contraintes mécaniques au cœur de la couche de protection sont alors également réduites, ce qui permet d'augmenter la durée de vie de la protection en conditions d'utilisation.

Les particules dispersées dans la matrice ou première phase de la couche de protection contre les CMAS peuvent être notamment constituées d'un mono-silicate de terre rare RE^{a}₂SiO₅ ou un di-silicates de terre rare RE^{a}₂Si₂O₇, où RE^{a} est choisi parmi : Y (Yttrium), La (Lanthane), Ce (Cérium), Pr (Praséodyme), Nd (Néodyme), Pm (Prométhium), Sm (Samarium), Eu (Europium), Gd (Gadolinium), Tb (Terbium), Dy (Dysprosium), Ho (Holmium), Er (Erbium), Tm (Thulium), Yb (Ytterbium), Lu (Lutécium). Plus préférentiellement, la terre rare RE^{a} du mono-silicate de terre rare RE^{a}₂SiO₅ ou du di-silicate de terre rare RE^{a}₂Si₂O₇, est choisie parmi : La, Gd, Dy, Yb, Y, Sm, Nd.

La deuxième phase « activatrice » pour la formation de phases apatites présente sous forme de particules dispersées dans la couche protection contre les CMAS peut être obtenue à partir de poudres, suspensions, précurseurs en solution ou une combinaison de ces différentes formes.

Les particules de silicate de terre rare RE^{a} dispersées dans la première phase présentent de préférence une taille moyenne comprise entre 5 nm et 50 µm et préférentiellement comprise entre 5 nm et 1 µm. Dans le présent exposé, les termes « compris entre ... et ... » doivent être entendus comme incluant les bornes.

La couche de protection présente une teneur volumique en particules de silicate de terre rare qui peut être comprise entre 1% et 80%, préférentiellement entre 1% et 30%.

La couche de protection peut présenter un gradient de composition suivant lequel le pourcentage volumique de la première phase constituée du matériau contre les CMAS et de la deuxième phase constituée par des particules de silicate de terre rare évolue dans le sens de l'épaisseur de la couche de protection. Plus précisément, le pourcentage volumique de particules de céramique de silicate de terre rare RE^{a} présentes dans la couche de protection contre les CMAS peut varier dans le sens de l'épaisseur de la couche de protection, le pourcentage volumique de particules de céramique de silicate de terre rare RE^{a} augmentant progressivement entre une première zone de ladite couche voisine du substrat et une deuxième zone de ladite couche éloignée de la première zone. En introduisant un tel gradient de teneur de particules de silicate de terre rare RE^{a} dans la couche de protection, on privilégie la réactivité et l'effet anti-CMAS au voisinage de la face supérieure de la couche de protection par une forte concentration de silicate de terre rare à cet endroit de ladite couche de protection tout en préservant la résistance thermomécanique du système par une plus faible concentration de silicate de terre rare dans la couche de protection au voisinage du substrat. En effet, le silicate de terre rare présente un faible coefficient de dilatation thermique qui peut amoindrir la tenue de la couche de protection au voisinage du substrat, les différences de coefficient de dilatation entre le silicate de terre rare et le matériau du substrat étant importantes.

La couche de protection présente de préférence une structure poreuse, ce qui lui permet d'avoir de bonnes propriétés d'isolation thermique. La couche de protection peut également présenter des fissures verticales, présentes initialement dans la couche ou formées en cours d'utilisation, qui permettent de conférer à la couche une plus grande capacité de déformation et d'atteindre, par conséquent, des durées de vie élevées. La microstructure poreuse et fissurée (initialement ou en cours d'utilisation) de la couche de protection est principalement obtenue en contrôlant le procédé de mise en forme (dépôt) de la couche comme bien connu en soi.

Grâce à la présence d'une deuxième phase « activatrice » dans la couche de protection permettant la formation de phases bloquantes pour les CMAS liquides au voisinage de la surface de la couche, ces porosités et fissures ne constituent plus des chemins privilégiés pour l'infiltration des CMAS fondus comme dans l'art antérieur. L'efficacité du matériau de protection contre les CMAS constitutif de la première phase est ainsi préservée.

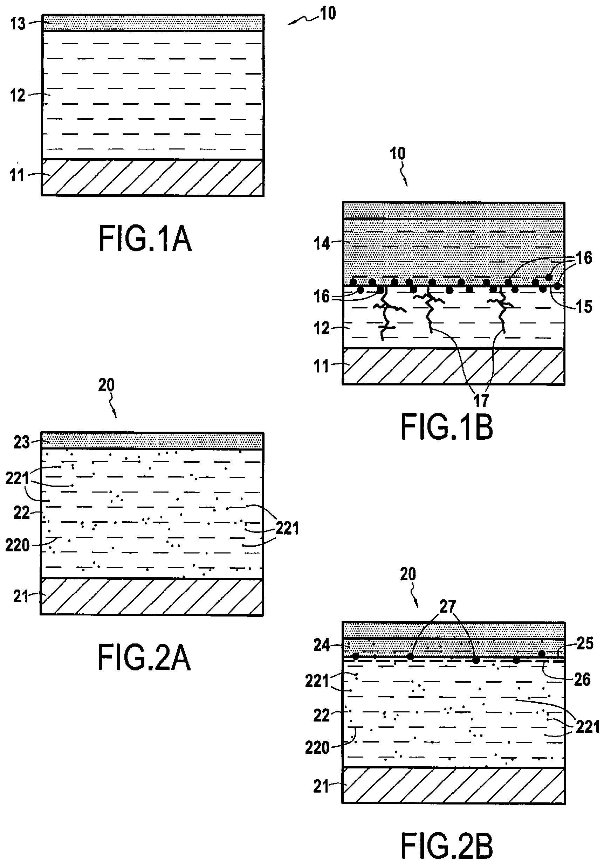

Les figures 1A, 1B, 2A et 2B illustrent les effets produits par une couche de protection contre les aluminosilicates de calcium et de magnésium CMAS selon l'invention, à savoir une couche de protection composite comprenant les première et deuxième phases décrites ci-avant, et une couche de protection contre les aluminosilicates de calcium et de magnésium CMAS selon l'art antérieur. Plus précisément, la figure 1A montre une pièce 10 constituée d'un substrat 11 en superalliage base nickel de type AM1 et revêtu d'une couche de protection contre les CMAS 12 selon l'art antérieur constituée de Gd₂Zr₂O₇, la pièce étant en présence de CMAS 13 tandis que la figure 1B montre la pièce 10 lorsqu'elle est exposée à de hautes températures qui entraînent la fusion des CMAS 13 et leur infiltration sous forme de contaminants liquides de type CMAS 14 dans la couche de protection 12.

La figure 2A montre une pièce 20 constituée d'un substrat 21 en superalliage base nickel de type AM1 et revêtu d'une couche de protection contre les CMAS 22 selon l'invention, la couche 22 comprenant ici une première phase 220 constituée de Gd₂Zr₂O₇ et une deuxième phase 221 dispersée dans la couche 22 et constituée de Gd₂Si₂O₇, la pièce étant en présence de CMAS 23 tandis que la figure 2B montre la pièce 20 lorsqu'elle est exposée à de hautes températures qui entraînent la fusion des CMAS 23 et leur infiltration sous forme de contaminants liquides de type CMAS 24 dans la couche de protection 22.

Dans le cas d'une couche de protection selon l'art antérieur telle que représentée sur la figure 1B, les contaminants liquides de type CMAS 14 s'infiltrent profondément dans la couche de protection 12 avant de former une phase apatite bloquante 15 tout en formant en outre dans cette zone des phases secondaires 16 en quantité importante comme les fluorites Zr(Gd,Ca)Oₓ qui entraînent l'apparition de fissures 17 dans la portion sous-jacente de la couche de protection 12.

De manière différente, dans le cas d'une couche de protection selon l'invention telle que représentée sur la figure 2B, la profondeur d'infiltration des contaminants liquides de type CMAS 24 dans la couche de protection 22 est limitée par la formation rapide de phases apatites bloquantes 25 et 26 de type Ca₂Gd₈(SiO₄)₆O₂, ce qui permet de contenir les contaminants liquides de type CMAS 24 au voisinage de la surface de la couche de protection 24. En outre, si des phases secondaires 27 (comme par exemple les fluorites Zr(Gd,Ca)Oₓ) apparaissent au niveau des phases apatites 25 et 26, ces phases secondaires sont présentes en quantité bien moins importante qu'avec la couche de protection de l'art antérieur et n'entraîne pas ici d'apparition de fissures dans la portion sous-jacente de la couche de protection 22.

La couche de protection contre les aluminosilicates de calcium et de magnésium CMAS selon l'invention présente une épaisseur comprise entre 1 µm et 1000 µm et préférentiellement comprise entre 5 µm et 200 µm.

Le substrat de la pièce de turbomachine objet de l'invention, peut être notamment en un superalliage à base de nickel ou cobalt. Dans ce cas, le substrat peut comporter en outre à sa surface une couche de liaison alumino-formeuse. A titre d'exemple, la couche de liaison alumino-formeuse peut inclure des alliages de type MCrAlY (où M = Ni, Co, Ni et Co), des aluminures de nickel type β-NiAl (modifiés ou non par du Pt, Hf, Zr, Y, Si ou des combinaisons de ces éléments), des aluminures d'alliages γ-Ni-γ'-Ni₃Al (modifiée ou non par du Pt, Cr, Hf, Zr, Y, Si ou des combinaisons de ces éléments), les phases MAX (Mₙ₊₁AXₙ (n=1,2,3) où M = Sc, Y, La, Mn, Re, W, Hf, Zr, Ti; A = groupes IIIA, IVA, VA, VIA ; X = C,N), ou toute autre sous couche de liaison adaptée, ainsi que des mélanges de toutes celles-ci. Le substrat peut être également constitué des superalliages AM1, MC-NG, CMSX4 et dérivés, ou René et dérivés.

Les couches de liaisons peuvent être formées et déposées notamment par PVD (dépôt par évaporation physique, en anglais « *Physical Vapor Deposition* »), APS, HVOF, LPPS (projection plasma à basse pression, en anglais « *Low Pressure Plasma Spraying* ») ou dérivés, IPS (projection plasma sous atmosphère inerte, en anglais « *Inert Plasma Spraying* »), CVD (dépôt par évaporation chimique, en anglais « *Chemical Vapor Deposition* »), APVS (Aluminisation Phase Vapeur Snecma), frittage flash (en anglais « *Spark Plasma Sintering* »), dépôt électrolytique, ainsi que tout autre procédé de dépôt et mise en forme adapté.

Le substrat utilisé dans l'invention présente une forme correspondant à celle de la pièce de turbomachine à réaliser. Les pièces de turbomachine comprenant la couche de protection selon l'invention peuvent être, mais pas exclusivement, des aubes mobiles, des distributeurs, des anneaux de turbine haute pression et des parois de chambre de combustion.

La couche de protection contre les aluminosilicates de calcium et de magnésium composite, c'est-à-dire comprenant les première et deuxième phases telles que définies ci-avant, peut être directement déposée sur le substrat de la pièce de turbomachine. La couche de protection de l'invention constitue dans ce cas une barrière thermique pour le substrat.

Selon une variante de réalisation, une couche de barrière thermique peut être interposée entre le substrat et la couche de protection composite de l'invention, ou entre une couche de liaison alumino-formeuse et la couche de protection composite de l'invention, cette dernière étant utilisée dans ce cas en tant que couche de fonctionnalisation à la surface de la couche de barrière thermique qui présente ou non une protection contre les contaminants liquides à haute température de type aluminosilicates de calcium et de magnésium CMAS. A titre d'exemple non limitatif, la couche de barrière thermique peut être constituée de zircone yttriée avec une teneur massique de Y₂O₃ comprise entre 7% et 8%. La couche de barrière thermique, sur laquelle est réalisée la couche de protection composite de l'invention, peut présenter une microstructure, homogène, homogène et poreuse, micro-fissurée verticalement, micro-fissurée verticalement et poreuse, colonnaire, colonnaire et poreuse, ainsi que des architectures incluant ces différentes microstructures.

La couche de barrière thermique peut être formée et déposée notamment par EB-PVD (dépôt en phase vapeur assisté par un faisceau d'électrons, en anglais « *Electron Beam Physical Vapor Déposition* »), APS, HVOF, voie sol-gel, SPS, SPPS (projection plasma de solution de précurseur, en anglais « Solution Precursor Plasma Spraying »), HVSFS ou tout autre procédé adapté.

La couche de protection composite de l'invention peut être formée et déposée par un des procédés suivants :
- APS (projection plasma à pression atmosphérique - en anglais *« Atmospheric Plasma Spraying »),*
- HVOF (projection par flamme à grande vitesse - en anglais « *High Velocity Oxygen Fuel »),*
- SPS (projection plasma de suspensions - en anglais « *Suspension Plasma Spraying »),*
- SPPS (projection plasma de solutions de précurseurs - en anglais *« Solution Precursor Plasma Spraying »),*
- HVSFS (Projection d'une suspension dans une flamme à grande vitesse - en anglais « *High Velocity Suspension Flame Spray* »), également connu sous le terme S-HVOF (Suspension-HVOF).

### Exemple 1

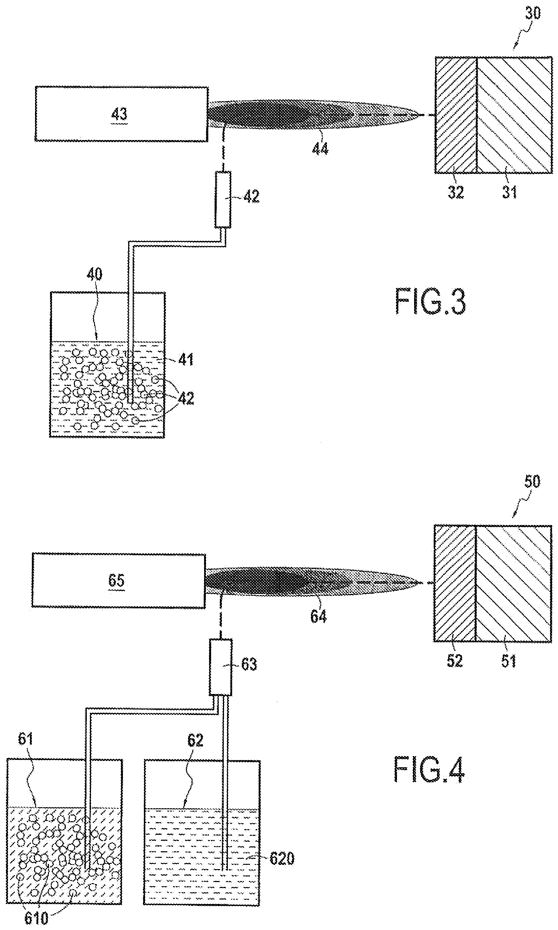

Comme illustré sur la figure 3, un procédé de fabrication d'une pièce de turbomachine 30 conforme à l'invention a été mis en œuvre sur un substrat 31 en superalliage base nickel de type AM1 sur lequel a été déposée une couche de protection composite contre les aluminosilicates de calcium et de magnésium CMAS 32 par projection SPS, la couche de protection 32 comprenant, conformément à l'invention, une première phase de Gd₂Zr₂O₇ en tant que matériau de protection contre les aluminosilicates de calcium et de magnésium CMAS et une deuxième phase de Y₂Si₂O₇ sous forme de particules dispersées dans la couche de protection 32 en tant que phase activatrice de phases apatites protectrices.

Dans cet exemple, une solution 40 contenant une poudre du matériau anti-CMAS en suspension 42, ici Gd₂Zr₂O₇, et des précurseurs liquides de la phase activatrice 41, ici Y₂Si₂O₂, dans des proportions volumiques adaptées pour la réalisation de la couche de protection 32 est utilisée. La solution 40 est injectée au travers d'un même injecteur 42 de suspension au cœur d'un jet plasma 44 généré par une torche à plasma 43, permettant le traitement thermocinétique de la solution 40. Dans cet exemple, les précurseurs de la phase Y₂Si₂O₇ peuvent être du nitrate d'yttrium Y(NO₃)₃ et de l'orthosilicate de tétraéthyle Si(OC₂H₅)₄ dissous dans l'éthanol. On obtient ainsi une couche de protection 32 comprenant une première phase de Gd₂Zr₂O₇ en tant que matériau anti-CMAS et formant la matrice de la couche 32 et une deuxième phase de Y₂Si₂O₇ en tant qu'activateur de phases apatites protectrices sous forme de particules finement dispersées dans la matrice de la couche 32.

L'exemple n'exclut pas la possibilité d'utiliser d'autres matériaux anti-CMAS ni d'autres matériaux silicates. L'exemple n'exclut pas non plus l'utilisation d'une solution de précurseurs pour la réalisation de la phase anti-CMAS et/ou des poudres en suspensions pour la réalisation de la phase silicate. Il est également possible de réaliser le revêtement composite en employant non plus une torche à plasma mais un dispositif HVOF.

### Exemple 2

Comme illustré sur la figure 4, un procédé de fabrication d'une pièce de turbomachine 50 conforme à l'invention a été mis en œuvre sur un substrat 51 en superalliage base nickel de type AM1 sur lequel a été déposée une couche de protection composite contre les aluminosilicates de calcium et de magnésium CMAS 52 par projection SPS, la couche de protection 52 comprenant, conformément à l'invention, une première phase de Gd₂Zr₂O₇ en tant que matériau de protection contre les aluminosilicates de calcium et de magnésium CMAS et une deuxième phase de Y₂Si₂O₇ sous forme de particules dispersées dans la couche de protection 52 en tant que phase activatrice de phases apatites protectrices.

Dans cet exemple, une première solution 61 contenant une poudre du matériau anti-CMAS en suspension 610, ici Gd₂Zr₂O₇, et une deuxième solution 62 contenant des précurseurs liquides de la phase activatrice 620, ici Y₂Si₂O₇, dans des proportions volumiques adaptées pour la réalisation de la couche de protection 52 sont utilisées. Les deux solutions 61 et 62 sont injectées au travers d'un même injecteur 63 de suspension au cœur d'un jet plasma 64 généré par une torche à plasma 65, permettant le traitement thermocinétique des solutions 61 et 62. Dans cet exemple, les précurseurs de la phase Y₂Si₂O₇ peuvent être du nitrate d'yttrium Y(NO₃)₃ et de l'orthosilicate de tétraéthyle Si(OC₂H₅)₄ dissous dans l'éthanol. L'exemple n'exclut pas la possibilité d'utiliser d'autres matériaux anti-CMAS ni d'autres matériaux silicates. On obtient ainsi une couche de protection 32 comprenant une première phase de Gd₂Zr₂O₇ en tant que matériau anti-CMAS et formant la matrice de la couche 32 et une deuxième phase de Y₂Si₂O₇ en tant qu'activateur de phases apatites protectrices sous forme de particules finement dispersées dans la matrice de la couche 32.

L'exemple n'exclut pas non plus l'utilisation d'une solution de précurseurs pour la réalisation de la phase anti-CMAS et/ou des poudres en suspensions pour la réalisation de la phase silicate. Il est également possible de réaliser le revêtement composite en employant non plus une torche à plasma mais un dispositif HVOF.

### Exemple 3

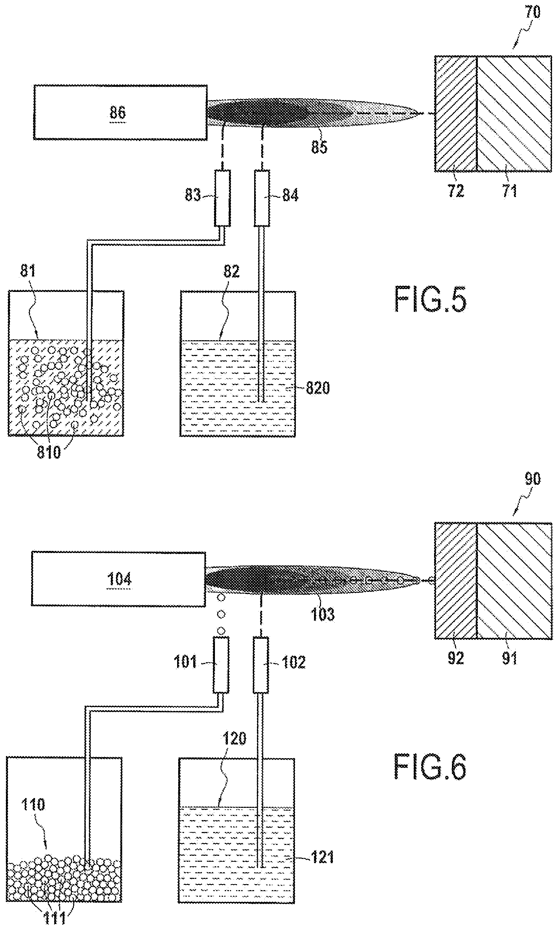

Comme illustré sur la figure 5, un procédé de fabrication d'une pièce de turbomachine 70 conforme à l'invention a été mis en œuvre sur un substrat 71 en superalliage base nickel de type AM1 sur lequel a été déposée une couche de protection composite contre les aluminosilicates de calcium et de magnésium CMAS 72 par projection SPS, la couche de protection 72 comprenant, conformément à l'invention, une première phase de Gd₂Zr₂O₇ en tant que matériau de protection contre les aluminosilicates de calcium et de magnésium CMAS et une deuxième phase de Y₂Si₂O₇ sous forme de particules dispersées dans la couche de protection 72 en tant que phase activatrice de phases apatites protectrices.

Dans cet exemple, une première solution 81 contenant une poudre du matériau anti-CMAS en suspension 810, ici Gd₂Zr₂O₇, et une deuxième solution 82 contenant des précurseurs liquides de la phase activatrice 820, ici Y₂Si₂O₇, dans des proportions volumiques adaptées pour la réalisation de la couche de protection 72 sont utilisées. Les solutions 81 et 82 sont injectées respectivement au travers d'un premier et un deuxième injecteurs de suspension spécifiques 83 et 84 au cœur d'un jet plasma 85 généré par une torche à plasma 86, permettant le traitement thermocinétique des solutions 81 et 82. Dans cet exemple, les précurseurs de la phase Y₂Si₂O₇ peuvent être du nitrate d'yttrium Y(NO₃)₃ et de l'orthosilicate de tétraéthyle Si(OC₂H₅)₄ dissous dans l'éthanol. On obtient ainsi une couche de protection 32 comprenant une première phase de Gd₂Zr₂O₇ en tant que matériau anti-CMAS et formant la matrice de la couche 32 et une deuxième phase de Y₂Si₂O₇ en tant qu'activateur de phases apatites protectrices sous forme de particules finement dispersées dans la matrice de la couche 32.

L'exemple n'exclut pas la possibilité d'utiliser d'autres matériaux anti-CMAS ni d'autres matériaux silicates. L'exemple n'exclut pas non plus l'utilisation d'une solution de précurseurs pour la réalisation de la phase anti-CMAS et/ou des poudres en suspensions pour la réalisation de la phase silicate. Il est également possible de réaliser le revêtement composite en employant non plus une torche à plasma mais un dispositif HVOF.

### Exemple 4

Comme illustré sur la figure 6, un procédé de fabrication d'une pièce de turbomachine 90 conforme à l'invention a été mis en œuvre sur un substrat 91 en superalliage base nickel de type AM1
sur lequel a été déposée une couche de protection composite contre les aluminosilicates de calcium et de magnésium CMAS 92 par projection hybride SPS et APS, la couche de protection 92 comprenant, conformément à l'invention, une première phase de Gd₂Zr₂O₇ en tant que matériau de protection contre les aluminosilicates de calcium et de magnésium CMAS et une deuxième phase de Y₂Si₂O₇ sous forme de particules dispersées dans la couche de protection 92 en tant que phase activatrice de phases apatites protectrices.

Dans cet exemple, une poudre 110 composée de particules 111 du matériau anti-CMAS, ici Gd₂Zr₂O₇, et une solution 120 contenant des précurseurs liquides de la phase activatrice 121, ici Y₂Si₂O₇, dans des proportions volumiques adaptées pour la réalisation de la couche de protection 92 sont utilisées. Pour la poudre 110, on utilise le procédé APS suivant lequel la poudre 110 est injectée au travers d'un premier injecteur spécifique 101 au cœur d'un jet plasma 103 généré par une torche à plasma 104, permettant le traitement thermocinétique de la poudre 110. Pour la solution 120, on utilise le procédé SPS suivant lequel la solution 120 est injectée au travers d'un deuxième injecteur de suspension spécifique 102 au cœur du jet plasma 103 généré par une torche à plasma 104, permettant le traitement thermocinétique de la phase 121. Dans cet exemple, les précurseurs de la phase Y₂Si₂O₇ peuvent être du nitrate d'yttrium Y(NO₃)₃ et de l'orthosilicate de tétraéthyle Si(OC₂H₅)₄ dissous dans l'éthanol. On obtient ainsi une couche de protection 32 comprenant une première phase de Gd₂Zr₂O₇ en tant que matériau anti-CMAS et formant la matrice de la couche 32 et une deuxième phase de Y₂Si₂O₇ en tant qu'activateur de phases apatites protectrices sous forme de particules finement dispersées dans la matrice de la couche 32.

L'exemple n'exclut pas la possibilité d'utiliser d'autres matériaux anti-CMAS ni d'autres matériaux silicates. L'exemple n'exclut pas non plus l'utilisation d'une solution de précurseurs pour la réalisation de la phase anti-CMAS et/ou des poudres en suspensions pour la réalisation de la phase silicate. Il est également possible de réaliser le revêtement composite en employant non plus une torche à plasma mais un dispositif HVOF.

## Revendications

1. Pièce de turbomachine (20) revêtue comprenant un substrat (21) et au moins une couche de protection contre les aluminosilicates de calcium et de magnésium (CMAS) (22) présente sur ledit substrat, la couche de protection (22) comprenant une première phase (220) d'un matériau susceptible de former une phase de type apatite ou anorthite en présence d'aluminosilicates de calcium et de magnésium (CMAS) et une deuxième phase (221) comprenant des particules d'au moins un silicate de terre rare RE^{a} dispersées dans la première phase, **caractérisé en ce que** le matériau de la première phase susceptible de former des phases de type apatite ou anorthite est un matériau de protection contre les aluminosilicates de calcium et de magnésium (CMAS) et correspond à un des matériaux suivants ou à un mélange de plusieurs des matériaux suivants : les zirconates de terre rare RE^{b}₂Zr₂O₇, où RE^{b} = Y (Yttrium), La (Lanthane), Ce (Cérium), Pr (Praséodyme), Nd (Néodyme), Pm (Prométhium), Sm (Samarium), Eu (Europium), Gd (Gadolinium), Tb (Terbium), Dy (Dysprosium), Ho (Holmium), Er (Erbium), Tm (Thulium), Yb (Ytterbium), Lu (Lutécium), les zircones totalement stabilisées, les phases delta A₄B₃O₁₂, où A= Y → Lu et B = Zr, Hf, les composites Y₂O₃ avec ZrO₂, les grenats d'yttrium et d'aluminium (YAG), les composites YSZ-Al₂O₃ ou YSZ-Al₂O₃-TiO₂.

2. Pièce selon la revendication 1, dans laquelle ledit au moins silicate de terre rare est un mono-silicates de terre rare RE^{a}₂SiO₅ ou un di-silicates de terre rare RE^{a}₂Si₂O₇, où RE^{a} est choisi parmi : Y (Yttrium), La (Lanthane), Ce (Cérium), Pr (Praséodyme), Nd (Néodyme), Pm (Prométhium), Sm (Samarium), Eu (Europium), Gd (Gadolinium), Tb (Terbium), Dy (Dysprosium), Ho (Holmium), Er (Erbium), Tm (Thulium), Yb (Ytterbium), Lu (Lutécium).

3. Pièce selon la revendication 1 ou 2, dans laquelle les particules de silicate de terre rare RE^{a} dispersées dans la couche de protection contre les aluminosilicates de calcium et de magnésium (CMAS) (22) présentent une taille moyenne comprise entre 5 nm et 50 µm.

4. Pièce selon l'une quelconque des revendications 1 à 3, dans laquelle la couche de protection contre les aluminosilicates de calcium et de magnésium (CMAS) (22) présente une teneur volumique en particules dudit au moins silicate de terre rare comprise entre 1% et 80%.

5. Pièce selon la revendication 4, dans laquelle le pourcentage volumique de particules de céramique de silicate de terre rare RE^{a} présentes dans la couche de protection contre les aluminosilicates de calcium et de magnésium (CMAS) (22) varie dans le sens de l'épaisseur de la couche de protection, le pourcentage volumique de particules de céramique de silicate de terre rare RE^{a} augmentant progressivement entre une première zone de ladite couche voisine du substrat (21) et une deuxième zone de ladite couche éloignée de la première zone.

6. Pièce selon l'une quelconque des revendications 1 à 5, dans laquelle la couche de protection contre les aluminosilicates de calcium et de magnésium (CMAS) (22) présente une épaisseur comprise entre 1 µm et 1000 µm.

7. Pièce selon l'une quelconque des revendications 1 à 6, comprenant en outre une couche de barrière thermique interposée entre le substrat (21) et la couche de protection contre les aluminosilicates de calcium et de magnésium (CMAS) (22).

8. Pièce selon l'une quelconque des revendications 1 à 7, dans laquelle le substrat (21) est en superalliage à base de nickel ou cobalt et comporte à sa surface une couche de liaison alumino-formeuse.

9. Procédé de fabrication d'une pièce de turbomachine (20) selon l'une quelconque des revendications 1 à 8, comprenant au moins une étape de formation d'une couche de protection contre les aluminosilicates de calcium et de magnésium (CMAS) (22) directement sur le substrat (21) ou sur une couche de barrière thermique présente sur le substrat, l'étape de formation étant réalisée avec un des procédés suivants :
- projection plasma de suspension à partir d'au moins une suspension contenant une poudre ou un précurseur d'un matériau de protection contre les aluminosilicates de calcium et de magnésium (CMAS) et une poudre ou un précurseur d'un silicate de terre rare RE,
- projection par flamme à grande vitesse à partir d'au moins une suspension contenant une poudre ou un précurseur d'un matériau de protection contre les aluminosilicates de calcium et de magnésium (CMAS) et une poudre ou un précurseur d'un silicate de terre rare RE ,
- projection plasma à pression atmosphérique d'une poudre d'un matériau de protection contre les aluminosilicates de calcium et de magnésium (CMAS) en combinaison avec projection plasma de suspension ou projection par flamme à grande vitesse à partir d'une solution contenant un précurseur de céramique de silicate de terre rare RE ou une poudre de céramique de silicate de terre rare RE en suspension.

## Patentansprüche

1. Beschichtetes Turbomaschinenteil (20), umfassend ein Substrat (21) und mindestens eine auf dem Substrat vorhandene Schutzschicht gegen die Calcium- und Magnesiumaluminosilikate (CMAS) (22), wobei die Schutzschicht (22) eine erste Phase (220) eines Materials umfasst, das imstande ist, eine Phase vom Typ Apatit oder Anorthit in Anwesenheit von Calcium- und Magnesiumaluminosilikaten (CMAS) zu bilden und eine zweite Phase (221), die Partikel mindestens eines in der ersten Phase dispergierten Seltenerde-Silikats RE^{a} umfasst,
**dadurch gekennzeichnet, dass**
das Material der erste Phase, das imstande ist, Phasen vom Typ Apatit oder Anorthit zu bilden, ein Schutzmaterial gegen die Calcium- und Magnesiumaluminosilikate (CMAS) ist und einem der folgenden Materialien oder einem Gemisch mehrerer der folgenden Materialien entspricht: den Seltenerde-Zirconaten RE^{b}₂Zr₂O₇, wobei RE^{b} = Y (Yttrium), La (Lanthan), Ce (Cerium), Pr (Praseodym), Nd (Neodym), Pm (Promethium), Sm (Samarium), Eu (Europium), Gd (Gadolinium), Tb (Terbium), Dy (Dysprosium), Ho (Holmium), Er (Erbium), Tm (Thulium), Yb (Ytterbium), Lu (Lutecium), den vollständig stabilisierten Zirconen, den Delta-Phasen A₄B₃O₁₂, wobei A = Y → Lu und B = Zr, Hf, den Kompositen Y₂O₃ mit ZrO₂, den Yttrium- und Aluminium-Granaten (YAG), den Kompositen YSZ-Al₂O₃ oder YSZ- Al₂O₃-TiO₂.

2. Teil nach Anspruch 1, wobei das mindesten eine Seltenerde-Silikat ein Seltenerde-Monosilikat RE^{a}₂SiO₅ oder ein Seltenerde-Disilikat RE^{a}₂Si₂O₇ ist, wobei RE^{a} ausgewählt ist aus: Y (Yttrium), La (Lanthan), Ce (Cerium), Pr (Praseodym), Nd (Neodym), Pm (Promethium), Sm (Samarium), Eu (Europium), Gd (Gadolinium), Tb (Terbium), Dy (Dysprosium), Ho (Holmium), Er (Erbium), Tm (Thulium), Yb (Ytterbium), Lu (Lutecium).

3. Teil nach Anspruch 1 oder 2, wobei die in der Schutzschicht gegen die Calcium- und Magnesiumaluminosilikate (CMAS) (22) dispergierten Partikel eines Seltenerde-Silikats RE^{a} eine mittlere Größe zwischen 5 nm und 50 µm aufweisen.

4. Teil nach einem der Ansprüche 1 bis 3, wobei die Schutzschicht gegen die Calcium- und Magnesiumaluminosilikate (CMAS) (22) einen Volumengehalt an Partikeln des mindestens Seltenerde-Silikats zwischen 1% und 80% aufweist.

5. Teil nach Anspruch 4, wobei der Volumenprozentsatz von in der Schutzschicht gegen die Calcium- und Magnesiumaluminosilikate (CMAS) (22) vorhandenen Keramikpartikeln eines Seltenerde-Silikats RE^{a} in Richtung der Dicke der Schutzschicht schwankt, wobei der Volumenprozentsatz von Keramikpartikeln eines Seltenerde-Silikats RE^{a} zwischen einer ersten Zone der Schicht neben dem Substrat (21) und einer zweiten Zone der Schicht, die von der ersten Zone entfernt ist, schrittweise zunimmt.

6. Teil nach einem der Ansprüche 1 bis 5, wobei die Schutzschicht gegen die Calcium- und Magnesiumaluminosilikate (CMAS) (22) eine Dicke zwischen 1 µm und 1000 µm aufweist.

7. Teil nach einem der Ansprüche 1 bis 6, umfassend ferner eine thermische Barriereschicht zwischen dem Substrat (21) und der Schutzschicht gegen die Calcium- und Magnesiumaluminosilikate (CMAS) (22).

8. Teil nach einem der Ansprüche 1 bis 7, wobei das Substrat (21) aus Superlegierung auf der Basis von Nickel oder Kobalt ist und auf seiner Oberfläche eine aluminoformende Verbindungsschicht aufweist.

9. Verfahren zur Herstellung eines Turbomaschinenteils (20) nach einem der Ansprüche 1 bis 8, umfassend mindestens einen Schritt des Bildens einer Schutzschicht gegen die Calcium- und Magnesiumaluminosilikate (CMAS) (22) direkt auf dem Substrat (21) oder auf eine auf dem Substrat vorhandenen thermischen Barriereschicht, wobei der Bildungsschritt mit einem der folgenden Verfahren durchgeführt wird:
- Suspensionsplasmaprojektion auf der Basis von mindestens einer Suspension, die ein Pulver oder einen Vorläufer eines Schutzmaterials gegen die Calcium- und Magnesiumaluminosilikate (CMAS) und ein Pulver oder einen Vorläufer eines Seltenerde-Silikats RE enthält,
- Hochgeschwindigkeits-Flammprojektion auf der Basis mindestens einer Suspension, die ein Pulver oder einen Vorläufer eines Schutzmaterials gegen die Calcium- und Magnesiumaluminosilikate (CMAS) und ein Pulver oder einen Vorläufer eines Seltenerde-Silikats RE enthält,
- Plasmaprojektion bei atmosphärischem Druck eines Pulvers eines Schutzmaterials gegen die Calcium- und Magnesiumaluminosilikate (CMAS) in Kombination mit Suspensionsplasmaprojektion oder Hochgeschwindigkeits-Flammprojektion auf der Basis einer Lösung, die einen Keramikvorläufer eines Seltenerde-Silikats RE oder ein Keramikpulver eines Seltenerde-Silikats RE in Suspension enthält.

## Claims

1. Coated gas turbine engine part (20) comprising a substrate (21) and at least one calcium-magnesium-alumino-silicate (CMAS) protection layer (22) present on said substrate, the protective layer (22) comprising a first phase (220) of a material capable of forming an apatite or anorthite phase in the presence of calcium-magnesium-aluminosilicates (CMAS) and a second phase (221) comprising particles of at least one rare-earth RE^{a} silicate dispersed in the first phase,
**characterized in that** the material of the first phase capable of forming phases apatite or anorthite phases is a calcium-magnesium-alumino-silicate (CMAS) protection material and corresponds to one of the following materials or a mixture of several of the following materials: rare-earth zirconates RE^{b}₂Zr₂O₇, where RE^{b} = Y (yttrium), La (lanthanum), Ce (cerium), Pr (praseodymium), Nd (neodymium), Pm (promethium), Sm (samarium), Eu (europium), Gd (gadolinium), Tb (terbium), Dy (dysprosium), Ho (holmium), Er (erbium), Tm (thulium), Yb (ytterbium), Lu (lutecium), fully stabilized zirconia, delta phases A₄B₃O₁₂, where A= Y → Lu and B = Zr, Hf, composites Y₂O₃ with ZrO₂, yttrium and aluminium garnets (YAG), composites YSZ-Al₂O₃ or YSZ-Al₂O₃-TiO₂.

2. Part according to claim 1, wherein said at least one rare-earth silicate is a rare-earth monosilicate RE^{a}₂SiO₅ or a rare-earth disilicate RE²₂Si₂O₇, wherein RE^{a} is selected from: Y (yttrium), La (lanthanum), Ce (cerium), Pr (praseodymium), Nd (neodymium), Pm (promethium), Sm (samarium), Eu (europium), Gd (gadolinium), Tb (terbium), Dy (dysprosium), Ho (holmium), Er (erbium), Tm (thulium), Yb (ytterbium), Lu (lutecium).

3. Part according to claim 1 or 2, wherein the rare-earth RE^{a} silicate particles dispersed in the calcium-magnesium-alumino-silicate (CMAS) protection layer (22) have an average size between 5 nm and 50 µm.

4. Part according to any one of claims 1 to 3, wherein the calcium-magnesium-alumino-silicate (CMAS) protection layer (22) has a volume content of particles of said at least one rare-earth silicate between 1% and 80%.

5. Part according to claim 4, wherein the volume percentage of rare-earth RE^{a} silicate ceramic particles present in the calcium magnesium alumino-silicate (CMAS) protection layer (22) varies in the direction of the thickness of the protective layer, the volume percentage of rare-earth RE^{a} silicate ceramic particles gradually increasing between a first zone of said layer adjacent to the substrate (21) and a second zone of said layer remote from the first zone.

6. Part according to any one of claims 1 to 5, wherein the calcium-magnesium-alumino-silicate (CMAS) protection layer (22) has a thickness between 1 µm and 1000 µm.

7. Part according to any one of claims 1 to 6, further comprising a thermal barrier layer interposed between the substrate (21) and the calcium-magnesium-alumino-silicate (CMAS) protection layer (22).

8. Part according to any one of claims 1 to 7, wherein the substrate (21) is a nickel or cobalt-based superalloy and has on its surface an alumino-forming bond coat.

9. Process for manufacturing a gas turbine engine part (20) according to any one of claims 1 to 8, comprising at least one step of forming a calcium-magnesium-alumino-silicate (CMAS) protection layer (22) directly on the substrate (21) or on a thermal barrier layer present on the substrate, the forming step being performed with one of the following methods:
- suspension plasma spraying from at least one suspension containing a powder or precursor of a calcium-magnesium-alumino-silicate (CMAS) protection material and a powder or precursor of a rare-earth RE silicate,
- high-velocity flame spraying from at least one suspension containing a powder or precursor of a calcium-magnesium-alumino-silicate (CMAS) protection material and a powder or precursor of a rare-earth RE silicate,
- atmospheric-pressure plasma spraying of a powder of a calcium magnesium alumino-silicate (CMAS) protection material in combination with suspension plasma spraying or high-velocity flame spraying from a solution containing a rare-earth RE silicate ceramic precursor or a rare-earth RE silicate ceramic powder in suspension.
